# EUROPEAN PATENT APPLICATION

(11) **EP 1 450 254 A2**
(43) Date of publication of application: **25.08.2004**
(21) Application number: 04003671.7
(22) Date of filing: 18.02.2004
(51) Int. Cl.: G06F 9/45

(54) **Method of converting software program for single processor to software program for multiprocessor**

(30) Priority: 18.02.2003 JP 2003039059
(71) Applicant: NEC CORPORATION, Tokyo (JP)
(72) Inventor: Kuwabara, Kenji, Tokyo (JP); Kanda, Masami, Kawasaki-shi Kanagawa (JP)
(74) Representative: Betten & Resch

(57) **Abstract**

There is disclosed a method of converting a software program for a single processor to that for a multiprocessor. In the method, to prepare an execute form program for operating software running on a single memory space on the multiprocessor, a source file is allocated to each processor by an object file unit to prepare the execute form program for each processor. The execute form program is mounted on the memory space managed by each processor with an arrangement in which addresses are prevented from being duplicated among the processors.

## Description

### BACKGROUND OF THE INVENTION

### Field of the Invention:

The present invention relates to a method of converting a software program for a single processor to that for a multiprocessor.

### Description of the Related Art:

Usually, to develop software program (hereinafter referred to simply as "program"), a source file is written up by an editor or the like and is complied by a compiler to prepare an object file. Furthermore, the object file is passed through a linker to allocate and link addresses of functions or variables in the program, and an execute form file, that is, an execute form program is generated.

The source file of the software program prepared in this manner is prepared in accordance with operation environments such as a configuration of hardware. Therefore, the software program for a single processor is prepared on the assumption that the hardware configuration is the single processor.

Additionally, in recent years, in the background of reduction of hardware cost, there has been a demand for enhancement of a processing capacity by a change of a device constituted of the single processor into a multiprocessor. This has raised a demand for conversion of the software program for the single processor into that for the multiprocessor.

To meet the demands, in Japanese Patent Application Laid-open No. 7-114516, a program concurrency method has been described in which the source file prepared for the single processor is subjected to program concurrency processing to prepare the source file of the program in accordance with the hardware configuration including a plurality of processors.

However, the conventional method has the following problems.

In general, to convert the software program prepared for the single processor into that for the multiprocessor, it has heretofore been necessary to remodel the source file of the software program for the single processor into that for the multiprocessor. To perform this operation, an operation equivalent to the software program for the single processor has to be assured. Therefore, after understanding logic of the software program in such a manner that the processing is possible independently among a plurality of processors, a structure or an execute unit of the software program needs to be fundamentally reviewed and divided to reconstruct the logic.

In this case, an operator needs to thoroughly know not only the software program for the single processor but also the hardware configuration of the multiprocessor, those who can handle this are limited, and much trouble is required for a conversion operation. This also causes a possibility that bugs are generated by the complicated operation.

Moreover, in the program concurrency method described in the above-described publication, the source file of the software program for the multiprocessor is automatically prepared based on the source file of the software program for the single processor. The program is prepared so as not to perform communication between the processors, but the source file of the software program for the multiprocessor is so-called mechanically prepared, and redundant processing is inevitably described as compared with manual programming. Moreover, there is a possibility that the source file is disadvantageous in a processing rate or a required memory capacity as compared with the manual programming. There is also a possibility that advantages of the original software program for the single processor are eliminated.

### SUMMARY OF THE INVENTION

The present invention has been developed in consideration of the disadvantages in the related art, and an object of the present invention is to provide a method of converting a software program for a single processor to a software program for a multiprocessor, which is capable of utilizing advantages of the original software program for the single processor and eliminating a trouble of a conversion operation and reducing a possibility of bug occurrence to convert the software program for the single processor to the software program for the multiprocessor.

To achieve the object, according to a first aspect of the present invention, there is provided a method of converting a software program for a single processor to a software program for a multiprocessor, comprising the steps of: allocating a source file to each processor by an object file unit to prepare an execute form program for operating software running on a single memory space on the multiprocessor for each processor.

According to a second aspect of the present invention, the method of converting the software program for the single processor to the software program for the multiprocessor, further comprising the steps of: mounting the execute form program described in the first aspect on the memory space to be managed by each processor with an arrangement in which addresses are prevented from being duplicated among the processors.

According to a third aspect of the present invention, there is provided the method of converting the software program for the single processor to the software program for the multiprocessor according to the first or second aspect, further comprising the steps of: starting exception processing possessed by the processor which is a refer requester to detect that there occurs a refer request to variables arranged on a memory space managed by another processor during running of the execute form program; and sending the refer request to an appropriate processor, wherein the processor which has received the refer request refers to the variables. to return refer results to the refer requester, and the processor which is the refer requester emulation-executes a variable refer command from the returned results to return to the next command from the exception processing.

According to a fourth aspect of the present invention, there is provided the method of converting the software program for the single processor to the software program for the multiprocessor according to the first or second aspect, further comprising the steps of: starting exception processing possessed by the processor which is a write requester to detect that there occurs a request for write into variables arranged on a memory space managed by another processor during running of the execute form program; and sending the write request to an appropriate processor, wherein the processor which has received the write request writes the variables, and the processor which is the write requester returns to the next command from the exception processing.

According to a fifth aspect of the present invention, there is provided the method of converting the software program for the single processor to the software program for the multiprocessor according to the first or second aspect, further comprising the steps of: starting exception processing possessed by the processor which is a write requester to detect that there occurs a request for write into variables arranged on a memory space managed by another processor during running of the execute form program; and sending the write request to an appropriate processor, wherein the processor which has received the write request writes the variables to return write results to the write requester, and the processor which is the write requester returns to the next command from the exception processing.

According to a sixth aspect of the present invention, there is provided the method of converting the software program for the single processor to the software program for the multiprocessor according to the first or second aspect, further comprising the steps of: starting exception processing possessed by the processor which is a call requester to detect that there occurs a call request for functions arranged on a memory space managed by another processor during running of the execute form program; and sending the call request to an appropriate processor, wherein the processor which has received the call request calls the functions to return call results to the call requester, and the processor which is the call requester emulation-executes a function call command from the returned results to return to the next command from the exception processing.

According to a seventh aspect of the present invention, there is provided the method of converting the software program for the single processor to the software program for the multiprocessor according to the third to sixth aspects, further comprising: communication between the processors in which communication including processing request transmission and processing result return via exception processing is possible.

According to an eighth aspect of the present invention, there is provided a cellular phone in which the software program for the multiprocessor converted by the method according to any one of the first to seventh aspects is installed.

As apparent from the above-described aspects, according to the present invention, when the software program for the single processor is converted to the software program for the multiprocessor, there can be provided the method of converting the software program for the single processor to that for the multiprocessor, capable of utilizing advantages of the original software program for the single processor and eliminating a trouble of a conversion operation and reducing a possibility of bug occurrence.

That is, according to the present invention, when the software running on a single memory space is operated on the multiprocessor, allocation to the processors may be considered by constituting element units of the software such as a source file, object file, and library without changing software structure or logic. Therefore, it is possible to reduce a period for development or verification or cost required for operations.

The above and many other objects, features and advantage of the present invention will become manifest to those skilled in the art upon making reference to the following detailed description and accompanying drawings in which referred embodiments incorporating the principle of the present invention are shown by way of illustrative examples.

### BRIEF DESCRIPTION OF THE DRAWINGS

FIG. 1 is an appearance view showing an outline of a terminal device for program development, which is one example of a device for executing one embodiment of a method of converting a software program for a single processor to that for a multiprocessor according to the present invention;
FIG. 2 is a block diagram showing an inner constitution of the terminal device for program development shown in FIG. 1;
FIG. 3 is an appearance view showing the outline of a cellular phone which is one example of a device which operates by the software program for the multiprocessor prepared by one embodiment of the method of converting the software program for the single processor to that for the multiprocessor according to the present invention.
FIG. 4 is a block diagram showing the inner constitution of the cellular phone shown in FIG. 3;
FIG. 5 is an explanatory view of a procedure for preparing an execute form file of the software program for the single processor;
FIG. 6 is an explanatory view of the procedure for preparing the execute form file of the software program for the multiprocessor;
FIGS. 7A to 7C are diagrams showing an address space to which the software program for the multiprocessor prepared by the embodiment of the present invention is allocated, FIG- 7A is a diagram showing a memory space having entity in a memory of one PE shown in FIG. 4, FIG. 7B is a diagram showing a memory space having entity in the memory of another PE shown in FIG. 4E, and FIG. 7C is a diagram showing a virtual memory space handled by another CPU shown in FIG. 4;
FIG. 8 is a diagram showing a state in which one of the execute form files shown in FIG- 6 is developed in the memory of the PE;
FIG. 9 is a diagram showing a state in which the other of the execute form files shown in FIG. 6 is developed in the memory of the PE; and
FIG. 10 is a flowchart of abort time processing in the embodiment of the present invention.

### DETAILED DESCRIPTION OF THE PREFERRED EMBODIMENT

Hereinafter, one preferable embodiment of the present invention will be described in detail with reference to the accompanying drawings.

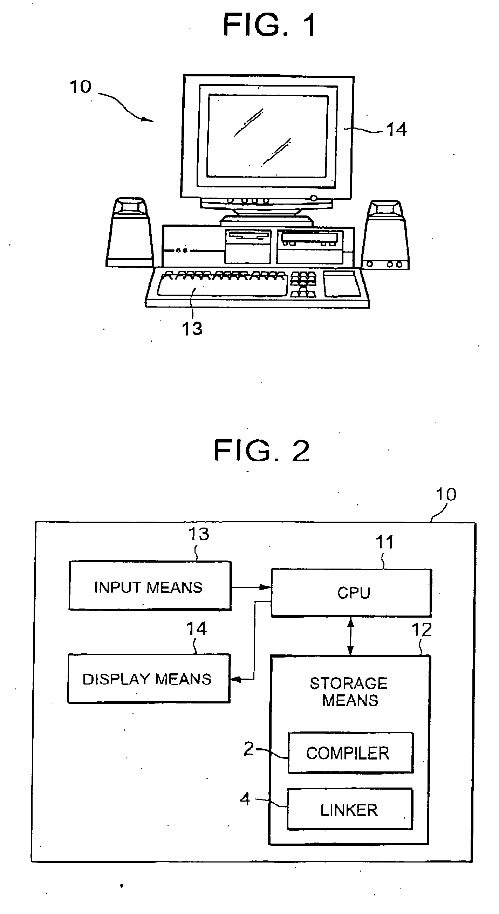

FIG. 1 is an appearance view showing an outline of a terminal device for program development, which is one example of a device for executing one embodiment of a method of converting a software program for a single processor to that for a multiprocessor according to the present invention.

In the present embodiment, the conversion to the software program for the multiprocessor from that for the single processor is performed by a terminal device for program development 10 shown in FIG. 1.

As shown in FIG. 1, for example, a personal computer is usable in the terminal device for program development 10, and the device includes input means 13 such as a mouse and keyboard and display means 14 such as a display.

FIG. 2 is a block diagram showing an inner constitution of the terminal device for program development 10 shown in FIG. 1.

As shown in FIG. 2, the terminal device for program development 10 includes a CPU 11 which controls the whole operation, storage means 12 which stores an application file and various data operating on the CPU 11, the input means 13 such as the mouse and keyboard, and the display means 14 such as a display.

Moreover, in the storage means 12, a compiler 2 and a linker 4 are stored which are types of application files which operate on the CPU 11. The compiler 2 and linker 4 are used in preparing the software program for the single processor or the multiprocessor.

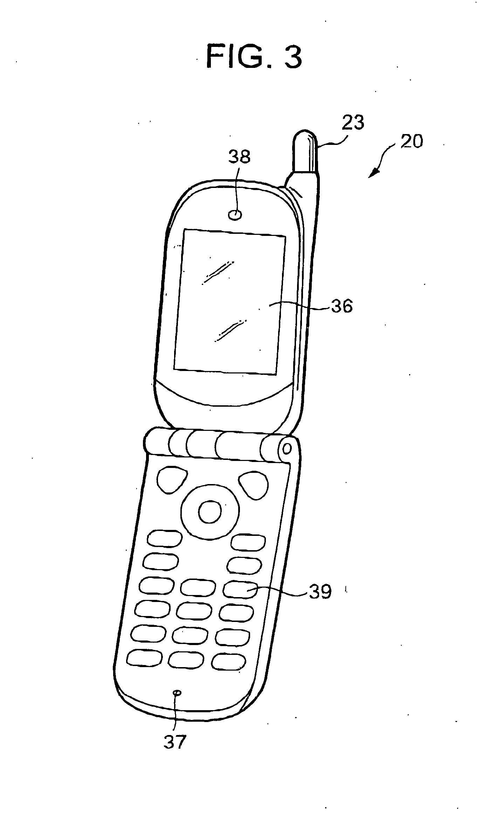

FIG. 3 is an appearance view showing the outline of a cellular phone which is one example of a device which operates by the software program for the multiprocessor prepared by one embodiment of the method of converting the software program for the single processor to that for the multiprocessor according to the present invention.

In the present embodiment, an example will be described in which the software program for the single processor for a processor element (hereinafter referred to as "PE") to operate the single cellular phone is converted to the software program for the multiprocessor for the PE to operate two cellular phones.

As shown in FIG. 3, a cellular phone 20 includes an antenna 23, input means 39 such as push-type button switches, display means 36 such as LCD, transmitter means 37 such as a microphone, and receiver means 38 such as a speaker.

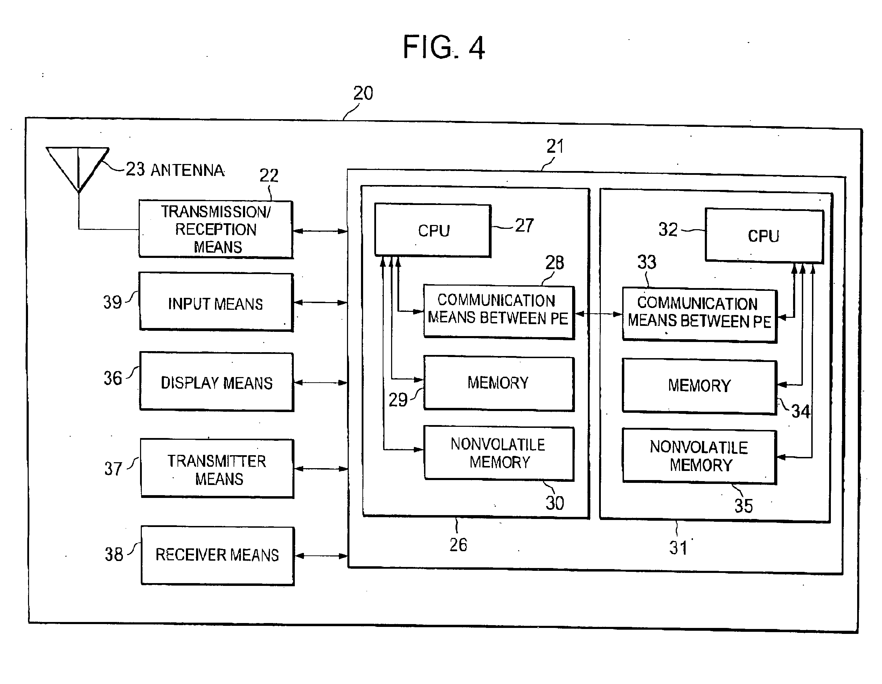

FIG. 4 is a block diagram showing the inner constitution of the cellular phone 20 shown in FIG. 3.

As shown in FIG. 4, the cellular phone 20 includes control means 21 which controls the whole operation, transmission/reception means 22 and antenna 23 which performs radio transmission/reception for calling and the like, input means 39 such as the push-type button switches, display means 36 such as the LCD, transmitter means 37 such as the microphone, and receiver means 38 such as the speaker.

Moreover, in the present embodiment, the control means 21 includes two processor elements PE 26 and PE 31. The present invention is not limited to this, and can, needless to say, also be applied a device including three or more PEs.

The PE 26 includes communication means between PEs 28 which performs communication with a CPU 27 and between the PE 26 and PE 31, a memory 29 which develops program operated by the CPU 27 at an execute time, and a nonvolatile memory 30 in which the program, various data and the like operated by the CPU 27 are stored in a nonvolatile manner.

The PE 31 includes communication means between PEs 33 which performs communication with a CPU 32 and between the PE 31 and PE 26, a memory 34 which develops the program and the like operated by the CPU 32 at the execute time, and a nonvolatile memory 35 in which the program, various data and the like operated by the CPU 32 are stored in the nonvolatile manner.

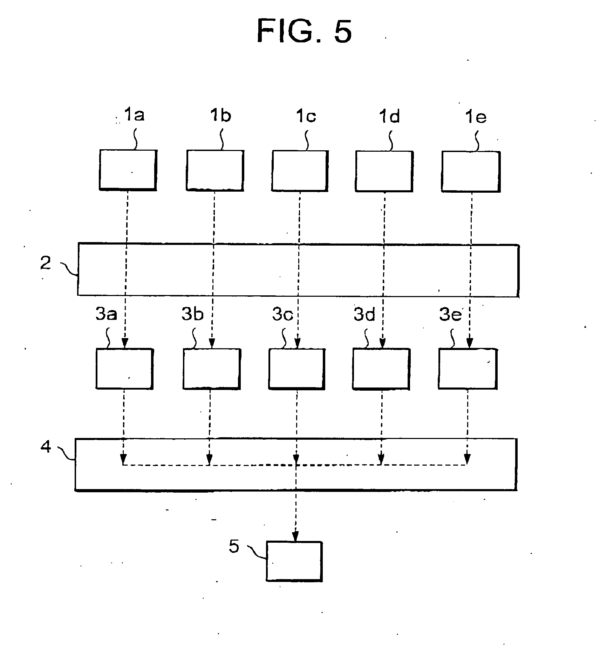

FIG. 5 is an explanatory view of a procedure for preparing an execute form file of the software program for the single processor.

In the present embodiment, an example will be described in which one execute form file (execute form program 5 is prepared as the software program for the single processor from five source files 1a to 1e as shown in FIG. 5.

First, the respective source files 1a to 1e are compiled by the compiler 2 to prepare object files 3a to 3e. All the object files 3a to 3e are linked by the linker 4 to prepare one execute form file 5 which is the software program for the single processor.

Next, a case will be described in which two execute form files are prepared as the software program for the multiprocessor for two PEs from the source files 1a to 1e shown in FIG. 5.

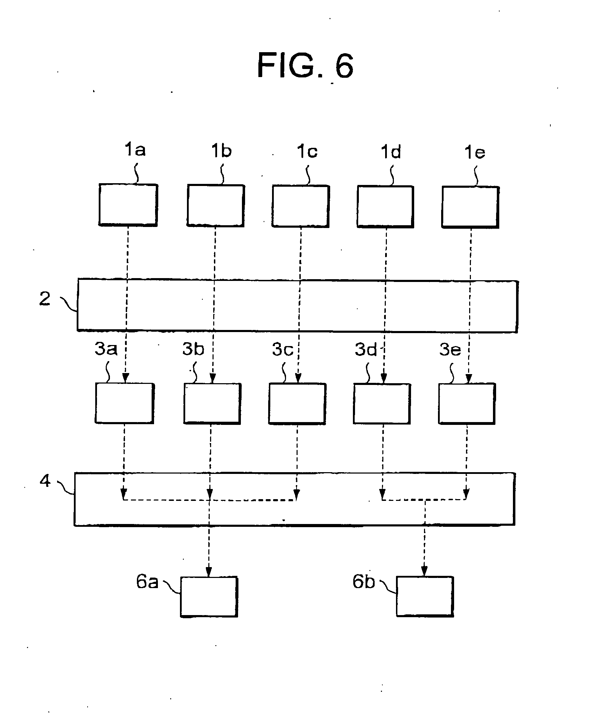

FIG. 6 is an explanatory view of the procedure for preparing the execute form file of the software program for the multiprocessor.

In the present embodiment, a case will be described in which two execute form files (execute form programs) 6a, 6b are prepared as the software program for the multiprocessor from the same five source files 1a to 1e as those shown in FIG. 5 as shown in FIG. 6.

First, the respective source files 1a to 1e are compiled by the compiler 2 to prepare the object files 3a to 3e.

Next, the object files 3a to 3e are divided into the same number of groups as that of PEs (the number of PEs is two as shown in FIG. 4 in the present embodiment, and are linked by the linker 4 for each group. In the example shown in FIG. 6, the object files 3a to 3c are linked to prepare the execute form file 6a, and the object files 3d to 3e are linked to prepare the execute form file 6b.

Here, for example, when a function included in the object file 3a refers to the function or the variable having entity in the object file 3d of another group, an address of a function or variable having no entity is not known in linking the object files 3a, 3b, and 3d, and the linking is impossible. To solve the problem, in the present embodiment, when the address is determined in the group where the entity of the function or variable exists during the linking, the determined address is notified during the linking with the groups in which the entity does not exist and which are referred to, and this completes the linking.

The execute form file 6a completed in this manner is stored in the nonvolatile memory 30 of the PE 26 shown in FIG. 4, developed in the memory 29, and executed by the CPU 27. The execute form file 6b is stored in the nonvolatile memory 35 of the PE 31 shown in FIG. 4, developed in the memory 34, and executed by the CPU 32.

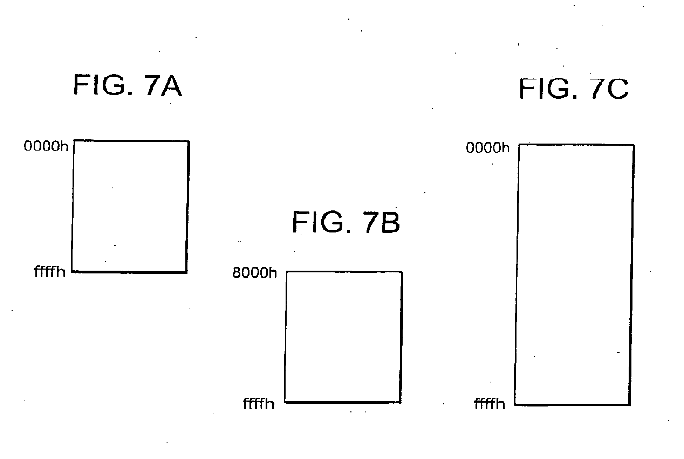

FIGS. 7A to 7C are diagrams showing an address space to which the software program for the multiprocessor prepared by the present embodiment is allocated, FIG. 7A is a diagram showing a memory space having the entity in the memory 29 of the PE 26 shown in FIG. 4, FIG. 7B is a diagram showing a memory space having the entity in the memory 34 of another PE 31 shown in FIG. 4E, and FIG. 7C is a diagram showing a virtual memory space handled by the CPU 27 of the PE 26 or the CPU 32 of the PE 31 shown in FIG. 4.

As shown in. FIGS. 7A to 7C, each of the CPUs 27 and 32 uses addresses 0000h to ffffh as the means at the time of program execute, the PE 26 has 0000h to 7fffh as the entity in the memory 29, and the PE 31 has 8000h to ffffh as the entity in the memory 34.

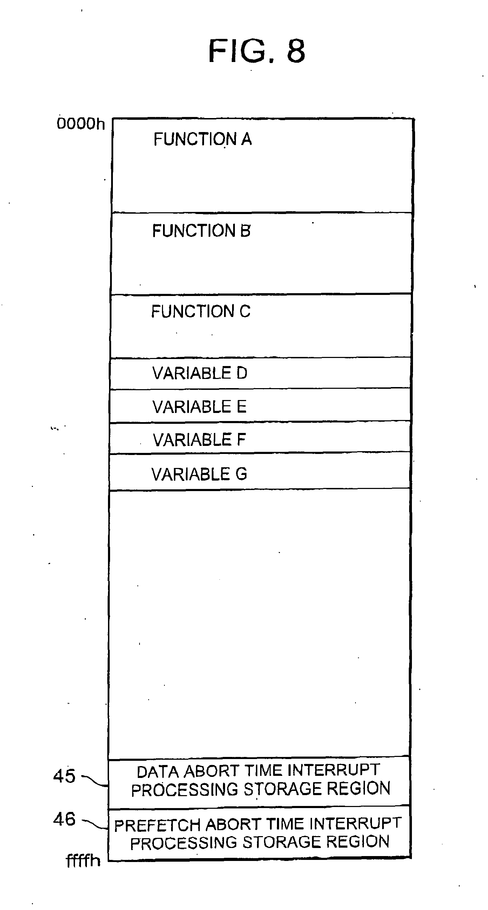

FIG. 8 is a diagram showing a state in which the execute form file 6a shown in FIG. 6 is developed in the memory 29 of the PE 26.

In the present embodiment, as shown in FIG. 8, the execute form file 6a has the entities of functions A, B, C and variables D, E, F, G each of which is developed in the address space of the memory 29.

Moreover, a data abort time interrupt processing storage region 45 is disposed in the memory 29. In the data abort time interrupt processing storage region 45, processing executed by interrupt, which is one type of so-called exception processing, is stored, when the CPU 27 is to read (refer to) or write the variable having no address of entity in the memory 29.

In the interrupt processing stored in the data abort time interrupt processing storage region 45, the communication means between PEs 28 is used to communicate with the PE 31 and to perform the read or write of the variable having no address of entity in the memory 29, which is a cause for the interrupt, with respect to the memory 34 having the entity of the variable. Therefore, to be consistent with this, the PE 31 requires a program which actually accesses the memory 34 for the variable.

Furthermore, a prefetch abort time interrupt processing storage region 46 is disposed in the memory 29. In the prefetch abort time interrupt processing storage region 46, the processing executed by the interrupt, which is one type of the so-called exception processing, is stored, when the CPU 27 is to call the function having no address of entity in the memory 29.

In the interrupt processing stored in the prefetch abort time interrupt processing storage region 46, the communication means between PEs 28 is used to communicate with the PE 31 and to perform the call of the function having no address of entity in the memory 29, which is a cause for the interrupt, with respect to the memory 34 having the entity of the function. Therefore, to be consistent with this, the PE 31 requires an execute program to actually calls the memory 34 for the function.

It is to be noted that the interrupt processing stored in the data abort time interrupt processing storage region 45 or the prefetch abort time interrupt processing storage region 46 may also be programmed beforehand, stored in the nonvolatile memory 30, and developed in the memory 29 at the execute time. The data abort time interrupt processing storage region 45 or the prefetch abort time interrupt processing storage region 46 may also be disposed in the CPU 27.

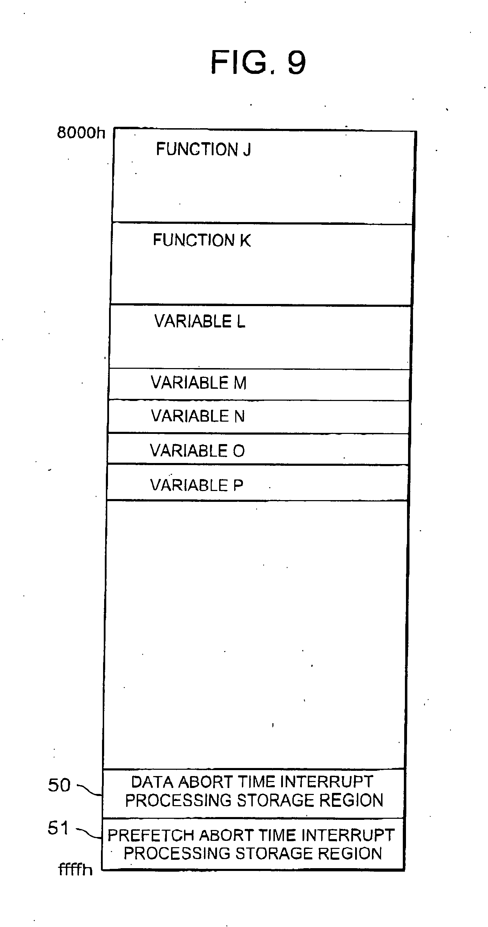

FIG. 9 is a diagram showing a state in which the execute form file 6b shown in FIG. 6 is developed in the memory 34 of the PE 31.

In the present embodiment, as shown in FIG. 9, the execute form file 6b has the entities of functions J, K and variables L, M, N, O, P each of which is developed in the address space of the memory 34.

Moreover, a data abort time interrupt processing storage region 50 is disposed in the memory 34. In the data abort time interrupt processing storage region 50, the processing executed by the interrupt, which is one type of the so-called exception processing, is stored, when the CPU 32 is to read or write the variable having no address of entity in the memory 34.

In the interrupt processing stored in the data abort time interrupt processing storage region 50, the communication means between PEs 33 is used to communicate with the PE 26 and to perform the read or write of the variable having no address of entity in the memory 34, which is a cause for the interrupt, with respect to the memory 29 having the entity of the variable. Therefore, to be consistent with this, the PE 26 requires the program which actually accesses the memory 29 for the variable.

Furthermore, a prefetch abort time interrupt processing storage region 51 is disposed in the memory 34. In the prefetch abort time interrupt processing storage region 51, the processing executed by the interrupt, which is one type of the so-called exception processing, is stored, when the CPU 32 is to call the function having no address of entity in the memory 34.

In the interrupt processing stored in the prefetch abort time interrupt processing storage region 51, the communication means between PEs 33 is used to communicate with the PE 26 and to perform the call of the function having no address of entity in the memory 34, which is a cause for the interrupt, with respect to the memory 29 having the entity of the function. Therefore, in response to this, the PE 26 requires the execute program to actually calls the memory 29 for the function.

It is to be noted that the interrupt processing stored in the data abort time interrupt processing storage region 50 or the prefetch abort time interrupt processing storage region 51 may also be programmed beforehand, stored in the nonvolatile memory 35, and developed in the memory 34 at the execute time. The data abort time interrupt processing storage region 50 or the prefetch abort time interrupt processing storage region 51 may also be disposed in the CPU 32.

Here, the abort time processing which is the interrupt processing stored in the data abort time interrupt processing storage region 45, prefetch abort time interrupt processing storage region 46, data abort time interrupt processing storage region 50, or prefetch abort time interrupt processing storage region 51 will further be described.

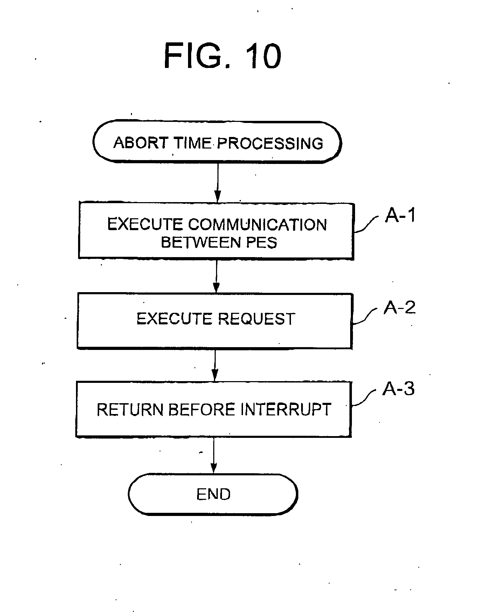

FIG. 10 is a flowchart of the abort time processing in the present embodiment.

In each PE, when there is an access request (read of (refer to) data, write, call for function) with respect to the address having no entity on a self side, the interrupt processing is executed In the interrupt processing, the communication between the PEs is performed to ask the PE other than itself to execute the access request (A-1). The PE which has received the request executes the request, when the entity exists in the PE, and returns execute results to the PE which is a requester if necessary (A-2). The PE which is the requester returns to the processing before the interrupt by the completion of the interrupt processing (A-3).

Several examples of the operation flow shown in FIG. 10 will hereinafter be described concretely.

When there occurs a refer request to variables arranged on the memory space managed by the other processor during running of the execute form program, the exception processing possessed by the processor which is the refer requester is started to detect this event, and the refer request is sent to the appropriate processor- The processor which has received the refer request refers to the variables to return refer results to the refer requester, and the processor which is the refer requester emulation-executes a variable refer command from the returned results to return to the next command or to the processing before the interrupt from the exception processing.

Moreover, when there occurs a write request into the variables arranged on the memory space managed by the other processor during the running of the execute form program, the exception processing possessed by the processor which is the write requester is started to detect this event, and the write request is sent to the appropriate processor. The processor which has received the write request writes the variables to return write results to the write requester, and the processor which is the write requester returns to the next command or to the processing before the interrupt from the exception processing. It is to be noted that with the write, the step of returning the write result to the write requester can be omitted.

Furthermore, when there occurs a call request for the variables arranged on the memory space managed by the other processor during the running of the execute form program, the exception processing possessed by the processor which is the call requester is started to detect this event, and the call request is sent to the appropriate processor. The processor which has received the call request calls the variables to return call results to the call requester, and the processor which is the call requester emulation-executes the function call command from the returned results and returns to the next command or to the processing before the interrupt from the exception processing.

It is to be noted that in the above-described embodiment the method of converting the software program for the single processor for the cellular phone to the software program for the multiprocessor has been described, but, needless to say, the present invention is not limited to the program for the cellular phone.

As described above, in accordance with the present invention, when the software running on the single memory space is operated on the multiprocessor, the allocation to the processors may be considered by constituting element units of the software such as the source file, object file, and library without changing the software structure or logic. Therefore, it is possible to reduce a period for development or verification or a cost required for the operations.
According to an embodiment, there is disclosed a method for converting a software program for a single processor to that for a multiprocessor. In the method, to prepare an execute form program for operating software running on a single memory space on the multiprocessor, a source file is allocated to each processor by an object file unit to prepare the execute form program for each processor. The execute form program is mounted on the memory space managed by each processor with an arrangement in which addresses are prevented from being duplicated among the processors.

## Claims

1. A method of converting a software program for a single processor to a software program for a multiprocessor, comprising the steps of: allocating a source file to each processor by an object file unit; and preparing an execute form program for operating software running on a single memory space on the multiprocessor for each processor.

2. The method of converting the software program for the single processor to the software program for the multiprocessor according to claim 1, further comprising the step of: disposing the execute form program mounted on the memory space to be managed by each processor in such a manner that addresses are prevented from being duplicated among the processors.

3. The method of converting the software program for the single processor to the software program for the multiprocessor according to claim 1 or 2, further comprising the steps of: starting exception processing possessed by the processor which is a refer requester to detect that there occurs a refer request to variables arranged on a memory space managed by another processor during running of the execute form program; and sending the refer request to an appropriate processor, wherein the processor which has received the refer request refers to the variables to return refer results to the refer requester, and the processor which is the refer requester emulation-executes a variable refer command from the returned results to return to the next command from the exception processing.

4. The method of converting the software program for the single processor to the software program for the multiprocessor according to claim 1 or 2, further comprising the steps of: starting exception processing possessed by the processor which is a write requester to detect that there occurs a request for write into variables arranged on a memory space managed by another processor during running of the execute form program; and sending the write request to an appropriate processor, wherein the processor which has received the write request writes the variables, and the processor which is the write requester returns to the next command from the exception processing.

5. The method of converting the software program for the single processor to the software program for the multiprocessor according to claim 1 or 2, further comprising the steps of: starting exception processing possessed by the processor which is a write requester to detect that there occurs a request for write into variables arranged on a memory space managed by another processor during running of the execute form program; and sending the write request to an appropriate processor, wherein the processor which has received the write request writes the variables to return write results to the write requester, and the processor which is the write requester returns to the next command from the exception processing.

6. The method of converting the software program for the single processor to the software program for the multiprocessor according to command 1 or 2, further comprising the steps of: starting exception processing possessed by the processor which is a call requester to detect that there occurs a call request for functions arranged on a memory space managed by another processor during running of the execute form program; and sending the call request to an appropriate processor, wherein the processor which has received the call request calls the functions to return call results to the call requester, and the processor which is the call requester emulation-executes a function call command from the returned results to return to the next command from the exception processing.

7. The method of converting the software program for the single processor to the software program for the multiprocessor according to claim 3, 4, or 5, further comprising: communication between the processors in which communication including processing request transmission and processing result return via the exception processing is possible.

8. A cellular phone in which the software program for the multiprocessor converted by the method according to any one of claims 1 to 6 is installed.
